# EUROPÄISCHE PATENTSCHRIFT

(11) **EP 4 288 322 B1**
(45) Veröffentlichungstag und Bekanntmachung des Hinweises auf die Patenterteilung: **06.08.2025**
(21) Anmeldenummer: 22701952.8
(22) Anmeldetag: 25.01.2022
(51) Int. Cl.: B62D 1/06, A44B 19/00

(54) **VERKLEIDUNGSEINRICHTUNG FÜR EIN KRAFTFAHRZEUG**
TRIM DEVICE FOR A MOTOR VEHICLE
DISPOSITIF DE GARNITURE POUR VÉHICULE AUTOMOBILE

(30) Priorität: 04.02.2021 DE 102021000565
(43) Veröffentlichungstag der Anmeldung: 13.12.2023
(73) Patentinhaber: VOLKSWAGEN AKTIENGESELLSCHAFT, 38440 Wolfsburg (DE)
(72) Erfinder: ZLATKOV, Dr. Branislav, 38104 Braunschweig (DE); BEVERUNG, Johannes, 14057 Berlin (DE); KÄMPER, Maren, 30655 Hannover (DE); KRAWCZYK, Christof, 38556 Bokensdorf (DE)
(86) Internationale Anmeldenummer: PCT/EP2022/051540
(87) Internationale Veröffentlichungsnummer: WO 2022/167258

(56) Entgegenhaltungen:
- WO-A1-2019/101781
- CN-Y- 2 789 100
- DE-A1- 102019 201 524
- JP-A- 2006 143 117
- JP-A- 2009 298 229
- US-A- 5 042 117
- US-A1- 2015 114 054
- US-A1- 2018 325 224
- US-A1- 2019 016 365

## Beschreibung

Die Erfindung betrifft eine Verkleidungseinrichtung, insbesondere eine Lenkradverkleidungseinrichtung, mit einem verformbaren flächigen Verkleidungselement mit zwei Längsrändern, das dazu ausgebildet ist, einen zu verkleidenden Gegenstand derart zu umfassen, dass die Längsränder einander gegenüberliegen, mit einem an dem Verkleidungselement angeordneten Reißverschluss, der zwei miteinander in Eingriff bringbare Zahnreihen aufweist, wobei jeweils eine Zahnreihe einem der Längsränder zugeordnet ist, und mit einer Abdeckung, welche die Zahnreihen des Reißverschlusses im geschlossenen Zustand überdeckt.

Mittels Reißverschlusses verschließbare Verkleidungseinrichtungen für zu verkleidende Gegenstände sind allgemein bekannt. Je nach Art des Gegenstandes kann dabei unerwünscht sein, dass der Verschlussmechanismus, d.h. die Zahnreihen des Reißverschlusses, den optischen oder haptischen Eindruck des Gegenstands beeinträchtigt. Entsprechend wurden im Stand der Technik Abdeckungen für Reißverschlüsse entwickelt, die dem Schutz des Reißverschlusses und/oder der Verbesserung der optischen oder haptischen Erscheinung des Reißverschlusses und damit der Verkleidungseinrichtung insgesamt dienen.

Aus der DE102015218424A1 ist beispielsweise bekannt, den Reißverschluss selbst zur Erzielung vorteilhafter optischer Gestaltungseffekte einzusetzen. Alternativ können die Reißverschlusshälften so angebracht werden, dass der Reißverschluss im geschlossenen Zustand durch das Verkleidungsmaterial verdeckt wird, d.h. die Längsränder des Verkleidungsmaterials liegen nach dem Verschließen des Reißverschlusses auf Stoß oder überlappend.

Aus der DE102017214007A1 ist bekannt, an einem Bezug eine Lasche anzubringen, die den Reißverschluss zumindest in der geschlossenen Stellung überdeckt, so dass dieser versteckt am zu verkleidenden Gegenstand liegt. Dabei kann der Gegenstand eine Nut aufweisen, entlang welcher sich der Reißverschluss erstreckt oder in die der Reißverschluss eingelassen ist, sodass der Reißverschluss den Außendurchmesser des Gegenstands nicht merklich oder über die Maßen erhöht.

Aus der DE102010019779A1 ist ein verdeckter Reißverschluss bekannt, der an einem Flächenmaterial derart befestigt ist, dass ein Paar von Verschlusselementen an einer oberen Seite angeordnet ist, und ein Paar von Abdeckbändern an der Oberfläche des Paars der Verschlusselemente angebracht ist, sodass die Verschlusselemente durch die Abdeckbänder verborgen werden, wodurch das Erscheinungsbild des Reißverschlusses verbessert wird. Dabei werden die Abdeckbänder an Stellen angeordnet, die von der Fläche des äußeren Flächenmaterials um die Höhe der Verschlusselemente getrennt angeordnet sind, wodurch es möglich wird, eine dreidimensionale Zierde bereitzustellen.

DE102019201524A1 offenbart eine Verkleidungseinrichtung für ein Kraftfahrzeug, insbesondere Lenkradverkleidungseinrichtung, der eingangs genannten Art. Dabei kann den Zahnreihen ein ein- oder zweiteiliger Schutzstreifen zugeordnet sein, welcher die Reißverschlusszähne überdeckt, sodass im geschlossenen Zustand des Reißverschlusses die Reißverschlusszähne nicht mehr sichtbar sind. Der Schutzstreifen überdeckt somit im geschlossenen Zustand beide Zahnreihen, was zu optischen Vorteilen und zu einem Schutz der darunterliegenden Reißverschlussverbindung führt.

Darüber hinaus offenbart auch US2018/325224A eine gattungsgemäße Verkleidungseinrichtung, insbesondere eine Lenkradverkleidungseinrichtung.

Der vorliegenden Erfindung liegt die Aufgabe zugrunde, eine optisch und haptisch verbesserte Verkleidungseinrichtung zu schaffen, die einfach montierbar ist.

Diese Aufgabe wird gelöst durch eine Verkleidungseinrichtung der eingangs genannten Art, deren Abdeckung so gestaltet ist, dass Längsränder der Abdeckung im geschlossenen Zustand des Reißverschlusses im Wesentlichen bündig mit den Längsrändern des Verkleidungselements abschließen. Diese Verkleidungseinrichtung hat einerseits den Vorteil, dass der als Reißverschluss ausgebildete Verschluss der Verkleidungseinrichtung haptisch als nicht störend empfunden wird, da die Abdeckung im geschlossenen Zustand des Reißverschlusses nicht merklich über das Verkleidungselement hinausragt.

Gegenüber der DE102017214007A1 wird dabei vorteilhafterweise keine Nut im zu verkleidenden Gegenstand benötigt, in welche der Reißverschluss bei der Montage der Verkleidungseinrichtung exakt eingebettet werden muss, sondern der Umstand, dass insbesondere hochwertige Verkleidmaterialien wie Leder eine bestimmte Materialstärke aufweisen, wird genutzt, um eine haptisch "passende", d.h. entlang der Längsränder der Verkleidungselemente im Wesentlichen bündig abschließende Abdeckung bereitzustellen. Anders ausgedrückt ist die Abdeckung erfindungsgemäß so gestaltet, dass sie den beim Schließen des Reißverschlusses entstehenden Kanal zwischen den Längsrändern des flächigen Verkleidungselements ausfüllt, ohne dabei über die Längsränder des Verkleidungselements hinauszuragen und ohne diese zumindest teilweise zu überdecken oder an der Ansichtsseite des Verkleidungsmaterials befestigt zu sein, wie dies aus einigen der vorgenannten Dokumente bekannt ist.

Dabei kann vorteilhafterweise ein üblicher, klassischer Spiralreißverschluss verwendet werden, der sich neben kostengünstiger Verfügbarkeit durch hohe Festigkeit und geringen Raumbedarf auszeichnet.

Ein weiterer Vorteil der vorliegenden Erfindung ist darin zu sehen, dass die Abdeckung im geschlossenen Zustand des Reißverschlusses, anders als beispielsweise bei der DE102019201524A1, präzise zwischen den Längsrändern des Verkleidungselements zu liegen kommt. Dies kann für optisch ansprechende Gestaltungen der am zu verkleidenden Gegenstand montierten Verkleidungseinrichtung genutzt werden, etwa indem das Material der Abdeckung bezüglich Farbe, Transparenz, Oberflächeneffekten und anderen optischen Eigenschaften in Kontrast zu den optischen Eigenschaften des Materials des Verkleidungselementes gewählt wird oder umgekehrt den optischen Eigenschaften des Materials des Verkleidungselementes so angenähert wird, dass Abdeckung und Verkleidungselement optisch nicht oder kaum unterscheidbar sind.

Ein für die (Serien-)Produktion verkleideter Gegenstände wichtiger Vorteil der vorliegenden Erfindung besteht darin, dass die Verkleidungseinrichtung vollständig vormontiert werden kann und für die Montage am zu verkleidenden Gegenstand nur sehr wenige Handgriffe und keine besonderen Werkzeuge erforderlich sind. In einigen Fortbildungen der vorliegenden Erfindung ist der sichtbare Teil der Abdeckung integral mit der Verkleidungseinrichtung ausgeführt und daher mit dieser vormontierbar, während in anderen Fortbildungen der vorliegenden Erfindung der sichtbare Teil der Abdeckung in Form eines Abdeckbands während oder nach dem Schließen des Reißverschlusses aufgebracht wird, beispielsweise durch einfache Arbeitsgänge wie Kleben oder Aufklipsen bzw. Aufschnappen. Letzteres hat den zusätzlichen Vorteil, dass das für die Optik ausschlaggebende Abdeckband sehr einfach ausgetauscht werden kann, beispielsweise wenn das Abdeckband verschlissen oder beschädigt ist oder wenn eine andere Optik gewünscht wird. Gleichzeitig schützt die Abdeckung den Reißverschluss vor Verschmutzung und den Benutzer des zu verkleidenden Gegenstands vor als unangenehm empfundenen Berührungen mit dem Reißverschluss.

In einer vorteilhaften Weiterbildung der Erfindung weist die Abdeckung einen Querschnitt im Wesentlichen in Form eines U-Profils auf und ist so gestaltet, dass beim Schließen des Reißverschlusses unterhalb des U-Profils zwischen der Abdeckung und den Zahnreihen ein sich in Längsrichtung erstreckender freier Raum gebildet wird, in dem ein Reißverschlussschieber bewegbar ist. In dieser Ausgestaltung wird die Bewegung des Reißverschlussschiebers nicht durch die Abdeckung behindert. Dies ist insbesondere nützlich, wenn der Reißverschlussschieber nicht mittels eines Griffs, sondern magnetisch bewegt werden soll oder aus anderen Gründen möglichst geringe (Reibungs-)Kräfte beim Führen des Reißverschlussschiebers wirken sollen.

In einer vorteilhaften Weiterbildung der Erfindung ist die Abdeckung einstückig mit einer der Zahnreihen ausgebildet. Dadurch ist es möglich, die Zahnreihe und die Abdeckung kostensparend in einem Arbeitsgang, beispielsweise durch Spritzguss, herzustellen.

In einer weiteren vorteilhaften Weiterbildung der Erfindung ist die Abdeckung in Längsrichtung zweigeteilt, d.h. jeder der Zahnreihen ist ein Abdeckungsteil zugeordnet, wobei je ein Abdeckungsteil einstückig mit je einer der Zahnreihen ausgebildet ist. Wiederum wird dadurch eine kostengünstige Fertigung ermöglicht.

Wie bereits erläutert kann in vorteilhaften Fortbildungen der Erfindung ein gesondertes Abdeckband den sichtbaren Teil der Abdeckung bilden. Dieses kann gemeinsam mit dem Schließvorgang des Reißverschlusses auf die Zahnreihen aufgebracht werden, beispielsweise durch Aufkleben. Dafür kann eine besondere Form der Reißverschlusszähne vorgesehen sein, die dann im geschlossenen Zustand eine Klebefläche zum Aufkleben des Abdeckbandes bilden.

In einer vorteilhaften Ausgestaltung ist der Reißverschlussschieber so gestaltet, dass das Abdeckband in einem kontinuierlichen und einheitlichen Arbeitsgang mit dem Schließen der Zahnreihen aufbringbar ist. Mittels eines solchen Reißverschlussschiebers kann einerseits die exakte Führung des Abdeckbandes gewährleistet werden und andererseits wird ein gesonderter Arbeitsgang zum Aufbringen des Abdeckbandes vermieden. Speziell bei dieser Ausgestaltung der Erfindung, aber auch bei den anderen hier erwähnten Ausgestaltungen der Erfindung kann vorteilhaft vorgesehen sein, dass der Reißverschlussschieber nach dem vollständigen Schließen des Reißverschlusses entfernt wird.

In vorteilhaften Weiterbildungen der vorliegenden Erfindung wird das Abdeckband nicht verklebt, sondern formschlüssig mit den Zahnreihen verbunden. Dies hat, wie bereits erwähnt, den Vorteil, dass das Abdeckband bei Bedarf ausgetauscht werden kann, ohne dafür die gesamte Verkleidungseinrichtung entfernen oder austauschen zu müssen.

Vorteilhafterweise ist dafür an zumindest einer der Zahnreihen ein sich in Längsrichtung erstreckender Körper mit zumindest einer seitlichen Vertiefung, insbesondere einer Nut, angebracht, in die zumindest ein Gegenstück des Abdeckbandes, insbesondere eine Feder, zur Herstellung der formschlüssigen Verbindung einschnappbar ist. Besonders vorteilhaft ist es, wenn der sich in Längsrichtung erstreckende Körper im geschlossenen Zustand des Reißverschluss aus zwei sich in Längsrichtung erstreckenden Teilkörpern gebildet wird, wobei je ein Teilkörper einstückig mit je einer der Zahnreihen ausgebildet ist und wobei jeder Teilkörper zumindest eine seitliche Vertiefung, insbesondere eine Nut, aufweist, in die Gegenstücke des Abdeckbandes, insbesondere Federn, zur Herstellung der formschlüssigen Verbindung einschnappbar sind.

Wie bereits erwähnt liegt ein Vorteil der vorliegenden Erfindung in den vielfältigen optischen Gestaltungsmöglichkeiten des Verschlusses. In Ausgestaltungen können die Zahnreihen durch Vernähen mit dem Verkleidungselement so verbunden werden, dass seitlich neben den Längsrändern verlaufende Nähte gebildet werden, deren Verlauf neben der Abdeckung sichtbar ist und die somit zur haptischen und/oder optischen Erscheinung der Verkleidungseinrichtung beitragen.

Besonders vorteilhaft ist es, ein Lenkrad, insbesondere ein Kraftfahrzeuglenkrad, oder einen Sitz, insbesondere einen Kraftfahrzeugsitz, mit einer erfindungsgemäßen Verkleidungseinrichtung zu verkleiden.

Im Folgenden wird die Erfindung anhand von Zeichnungen näher erläutert. Darin zeigen:
Fig. 1A und 1B ein erstes Ausführungsbeispiel einer erfindungsgemäßen Verkleidungseinrichtung, wobei Fig. 1A eine Querschnittsansicht und Fig. 1B eine perspektivische Ansicht in zu Fig. 1A entgegengesetzter Blickrichtung zeigt;
Fig. 2A und 2B ein zweites Ausführungsbeispiel einer erfindungsgemäßen Verkleidungseinrichtung, wobei Fig. 2A eine Querschnittsansicht und Fig. 2B eine perspektivische Ansicht in zu Fig. 2A entgegengesetzter Blickrichtung zeigt;
Fig. 3A und 3B ein drittes Ausführungsbeispiel einer erfindungsgemäßen Verkleidungseinrichtung, wobei Fig. 3A eine Querschnittsansicht und Fig. 3B eine perspektivische Ansicht in zu Fig. 3A entgegengesetzter Blickrichtung zeigt;
Fig. 4A bis 4C ein viertes Ausführungsbeispiel einer erfindungsgemäßen Verkleidungseinrichtung, wobei Fig. 4A eine Querschnittsansicht, Fig. 4B eine perspektivische Ansicht in zu Fig. 4A entgegengesetzter Blickrichtung und Fig. 4C eine perspektivische Ansicht in Blickrichtung der Fig. 4A zeigt.

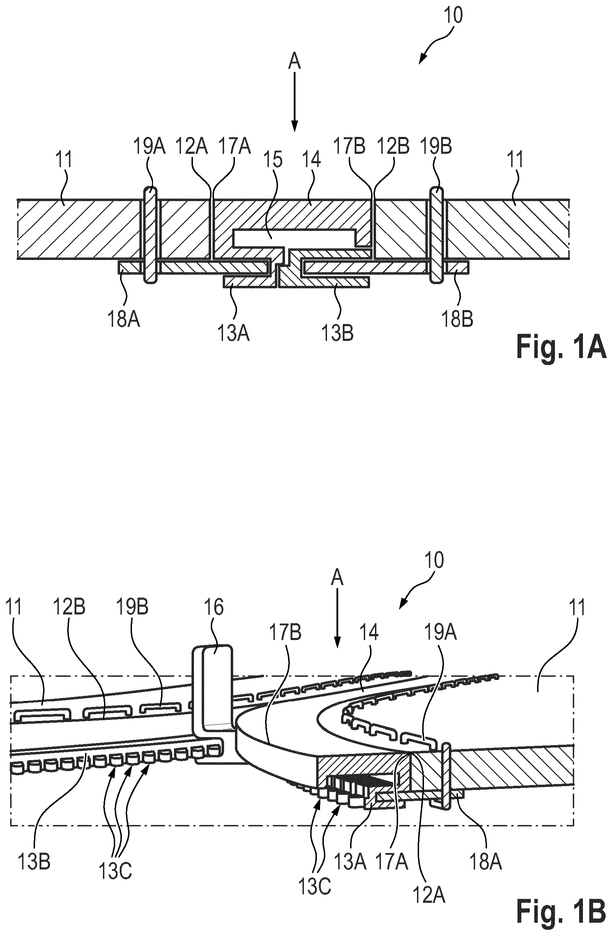

Fig. 1A zeigt ein erstes Ausführungsbeispiel einer erfindungsgemäßen Verkleidungseinrichtung 10. Ein verformbares flächiges Verkleidungselement 11 ist im am zu verkleidenden Gegenstand (nicht dargestellt) montierten Zustand im Querschnitt gezeigt. Das Verkleidungselement 11 weist zwei Längsränder 12A, 12B auf, die einander gegenüberliegen. Am Verkleidungselement 11 ist ein Reißverschluss angeordnet, der zwei Zahnreihen 13A, 13B aufweist, die miteinander in Eingriff gebracht sind. Eine erste Zahnreihe 13A weist eine Abdeckung 14 auf, welche den Reißverschluss im geschlossenen Zustand überdeckt.

Die Abdeckung 14 ist im in Fig. 1A dargestellten Beispiel einstückig mit der ersten Zahnreihe 13A verbunden und weist einen Querschnitt im Wesentlichen in Form eines U-Profils auf und ist so gestaltet, dass beim Schließen des Reißverschlusses unterhalb des U-Profils zwischen der Abdeckung 14 und den Zahnreihen 13A, 13B ein sich in Längsrichtung erstreckender freier Raum 15 gebildet wird, in dem ein Reißverschlussschieber 16 (siehe Fig. 1B) bewegbar ist. Ferner wird durch das U-Profil gegenüber einem Vollprofil Material eingespart, ohne dass es zu Einschränkungen hinsichtlich der Stabilität kommt, da ein nicht mit der ersten Zahnreihe 13A verbundener Schenkel des U-Profils sich im geschlossenen Zustand des Reißverschlusses auf der zweiten Zahnreihe 13B abstützt, die sich ihrerseits in vielen Realisierungen der vorliegenden Erfindung am zu verkleidenden Gegenstand abstützt.

Die Abdeckung 14 ist dabei so gestaltet, dass Längsränder 17A, 17B der Abdeckung im geschlossenen Zustand des Reißverschlusses im Wesentlichen bündig mit den Längsrändern 12A, 12B des Verkleidungselements 11 abschließen. Mit anderen Worten ist die Abdeckung 14 so dimensioniert, dass die Abdeckung in Richtung der durch Pfeil A gekennzeichneten Ansichtsseite der Verkleidungseinrichtung 10 nicht oder jedenfalls nicht merklich über das Verkleidungselement 11 hinausragt und/oder das Verkleidungselement 11 nicht oder jedenfalls nicht merklich über die Abdeckung 14 hinausragt. Vorzugsweise ist Abdeckung 14 also so gestaltet, dass im geschlossenen Zustand des Reißverschlusses die in Richtung der Ansichtsseite A durch das Verkleidungselement 11 und die Abdeckung 14 gebildete gemeinsame Oberfläche im Wesentlichen frei von Erhebungen oder Vertiefungen verläuft, insbesondere frei von Erhebungen und Vertiefungen, die für einen Benutzer des zu verkleidenden Gegenstandes haptisch wahrnehmbar sind.

In Ausführungsbeispielen können die Zahnreihen 13A, 13B an Trägerstreifen 18A, 18B befestigt sein, oder die Zahnreihen 13A, 13B werden durch auf Trägerstreifen 18A, 18B befestigte einzelne Zähne 13C (siehe Fig. 1B) gebildet. In anderen Ausführungsbeispielen können die Zahnreihen 13A, 13B einstückig mit den Trägerstreifen 18A, 18B ausgebildet sein. Die Trägerstreifen 18A, 18B sind ihrerseits am Verkleidungselement 11 entlang dessen Längsrändern 12A, 12B befestigt. Diese Befestigung kann durch Verkleben oder Verschweißen erreicht werden und/oder durch Vernähen mittels Nähten 19A, 19B, wie im Beispiel der Fig. 1A dargestellt.

Fig. 1B zeigt das in Fig. 1A dargestellte Ausführungsbeispiel der vorliegenden Erfindung in perspektivischer Darstellung aus einer zu Fig. 1A entgegengesetzten Blickrichtung, wobei ein Teil des Reißverschlusses im geschlossenen Zustand und ein Teil des Reißverschlusses im geöffneten Zustand gezeigt ist. Der Reißverschlussschieber 16 dient dazu, die Zähne 13C der beiden Zahnreihen 13A, 13B in Eingriff oder außer Eingriff zu bringen. Vorzugsweise befindet sich der den Eingriff bewirkende oder öffnende Teil (nicht dargestellt) des Reißverschlussschiebers 16 weitgehend im bereits geschlossenen Teil des Reißverschlusses, um ungehindert im Raum 15, der erst beim Schließen des Reißverschlusses gebildet wird, bewegt werden können, während sich der Griff des Reißverschlussschiebers 16 vorzugsweise im noch geöffneten Teil des Reißverschlusses befindet, da sonst die sich schließende Verbindung zwischen Längsrand 17B der Abdeckung und Längsrand 12B des Verkleidungselements die Bewegung des Griffs des Reißverschlussschiebers 16 behindert. Wie bereits erwähnt kann auch ein griffloser Reißverschlussschieber (nicht dargestellt), der im Raum 15 bewegbar ist, verwendet werden.

Die in Ausführungsbeispielen seitlich neben den Längsrändern 12A, 12B verlaufenden Nähte 19A, 19B bilden gemeinsam mit Abdeckung 14 einen optisch und haptisch ansprechenden Verschluss des Verkleidungselements 11.

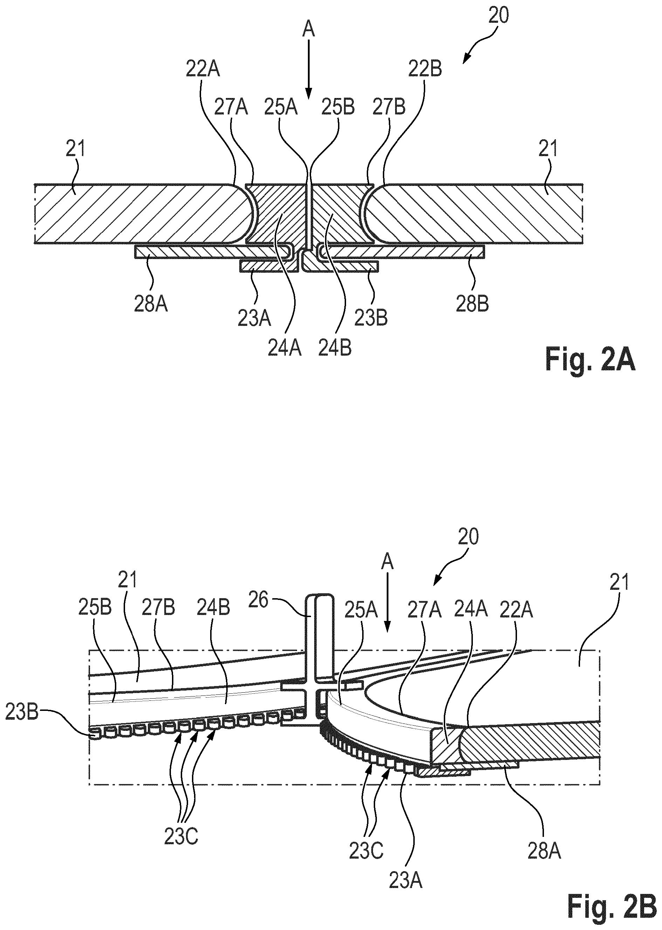

Fig. 2A zeigt ein zweites Ausführungsbeispiel einer erfindungsgemäßen Verkleidungseinrichtung 20. Ein verformbares flächiges Verkleidungselement 21 ist im am zu verkleidenden Gegenstand (nicht dargestellt) montierten Zustand im Querschnitt gezeigt. Das Verkleidungselement 21 weist zwei Längsränder 22A, 22B auf, die einander gegenüberliegen und die im Beispiel der Fig. 2A konvex ausgestaltet sind, aber natürlich auch gerade ausgebildet sein können. Am Verkleidungselement 21 ist ein Reißverschluss angeordnet, der zwei Zahnreihen 23A, 23B aufweist, die miteinander in Eingriff gebracht sind. Eine zweiteilige Abdeckung 24A, 24B überdeckt den Reißverschluss im geschlossenen Zustand, genauer gesagt die dann in Eingriff befindlichen Zahnreihen 23A, 23B.

Ein erster Abdeckungsteil 24A weist in Längsrichtung zwei Längsränder 25A, 27A auf, wobei der erste Längsrand 27A so gestaltet ist, dass er im Wesentlichen bündig mit einem ersten Längsrand 22A des Verkleidungselements 21 abschließt. Im Beispiel der Fig. 2A ist der erste Längsrand 27A des ersten Abdeckungsteils 24A passend zum konvexen ersten Längsrand 22A des Verkleidungselements 21 konkav gestaltet. Der erste Abdeckungsteil 24A ist an der ersten Zahnreihe 23A befestigt bzw. mit dieser einstückig hergestellt.

Dabei ist der erste Abdeckungsteil 24A so dimensioniert, dass der erste Abdeckungsteil 24A in Richtung der durch Pfeil A gekennzeichneten Ansichtsseite der Verkleidungseinrichtung 20 nicht oder jedenfalls nicht merklich über das Verkleidungselement 21 hinausragt und/oder das Verkleidungselement 21 nicht oder jedenfalls nicht merklich über den ersten Abdeckungsteil 24A hinausragt.

In gleicher Weise weist ein zweiter Abdeckungsteil 24B in Längsrichtung zwei Längsränder 25B, 27B auf, wobei ein erster Längsrand 27B so gestaltet ist, dass er im Wesentlichen bündig mit einem zweiten Längsrand 22B des Verkleidungselements 21 abschließt. Im Beispiel der Fig. 2A ist der erste Längsrand 27B des zweiten Abdeckungsteils 24B passend zum konvexen zweiten Längsrand 22B des Verkleidungselements 21 konkav gestaltet. Der zweite Abdeckungsteil 24B ist an der zweiten Zahnreihe 23B befestigt bzw. mit dieser einstückig hergestellt.

Auch der zweite Abdeckungsteil 24B ist dabei so dimensioniert, dass der zweite Abdeckungsteil 24B in Richtung der durch Pfeil A gekennzeichneten Ansichtsseite der Verkleidungseinrichtung 20 nicht oder jedenfalls nicht merklich über das Verkleidungselement 21 hinausragt und/oder das Verkleidungselement 21 nicht oder jedenfalls nicht merklich über den zweiten Abdeckungsteil 24B hinausragt.

Ferner sind die beiden Abdeckungsteile 24A, 24B so zueinander passend gestaltet, dass deren jeweils zweite Längsränder 25A, 25B einen im Wesentlichen bündigen Abschluss bilden, wenn sich der Reißverschluss im geschlossenen Zustand befindet. Dabei können die beiden Abdeckungsteile zueinander passende Profile aufweisen, beispielsweise eine sich in Längsrichtung erstreckende Nut (nicht dargestellt) im ersten Abdeckungsteil 24A und eine dazu passende Feder (nicht dargestellt) im zweiten Abdeckungsteil 24B, um die Widerstandsfähigkeit der aus den beiden Abdeckungsteilen gebildeten Abdeckung gegenüber von der Ansichtsseite zum abzudeckenden Gegenstand hin wirkenden Kräften sowie die Präzision der Verbindungsbündigkeit zwischen den Längsrändern 25A, 25B der Abdeckungsteile 24A, 24B zu erhöhen.

Insgesamt sind die beiden Abdeckungsteile 24A, 24B also so gestaltet, dass die drei sich im geschlossenen Zustand des Reißverschlusses ergebenden Übergänge zwischen dem ersten Längsrand 22A des Verkleidungselements 21 und dem ersten Abdeckungsteil 24A, zwischen dem ersten Abdeckungsteil 24A und dem zweiten Abdeckungsteil 24B sowie zwischen dem zweiten Abdeckungsteil 24B und dem zweiten Längsrand 22B des Verkleidungselements 21 allesamt im Wesentlichen bündig abschließen, mit anderen Worten also so, dass die in Richtung der Ansichtsseite A durch das Verkleidungselement 21 und die Abdeckungsteile 24A, 24B insgesamt gebildete Oberfläche im Wesentlichen frei von Erhebungen oder Vertiefungen verläuft, insbesondere frei von Erhebungen und Vertiefungen, die für einen Benutzer des zu verkleidenden Gegenstandes haptisch wahrnehmbar sind.

In Ausführungsbeispielen können die Zahnreihen 23A, 23B an Trägerstreifen 28A, 28B befestigt sein, oder die Zahnreihen 23A, 23B werden durch auf Trägerstreifen 28A, 28B befestigte einzelne Zähne 23C (siehe Fig. 2B) gebildet. In anderen Ausführungsbeispielen können die Zahnreihen 23A, 23B einstückig mit den Trägerstreifen 28A, 28B ausgebildet sein. Die Trägerstreifen 28A, 28B sind ihrerseits am Verkleidungselement 21 entlang dessen Längsrändern 22A, 22B befestigt. Diese Befestigung kann, wie im Beispiel der Fig. 2A dargestellt, durch Verkleben oder Verschweißen erreicht werden und/oder durch Vernähen (siehe hierzu Fig. 1A/B und entsprechende Beschreibung weiter oben; im Beispiel der Fig. 2A/B nicht dargestellt).

Fig. 2B zeigt das in Fig. 2A dargestellte Ausführungsbeispiel der vorliegenden Erfindung in perspektivischer Darstellung aus einer zu Fig. 2A entgegengesetzten Blickrichtung, wobei ein Teil des Reißverschlusses im geschlossenen Zustand und ein Teil des Reißverschlusses im geöffneten Zustand gezeigt ist. Ein Reißverschlussschieber 26 dient dazu, die Zähne 23C der beiden Zahnreihen 23A, 23B in Eingriff oder außer Eingriff zu bringen.

Die durch die beiden Abdeckungsteile 24A, 24B gebildete Abdeckung bildet wiederum einen optisch und haptisch ansprechenden Verschluss des Verkleidungselements 21.

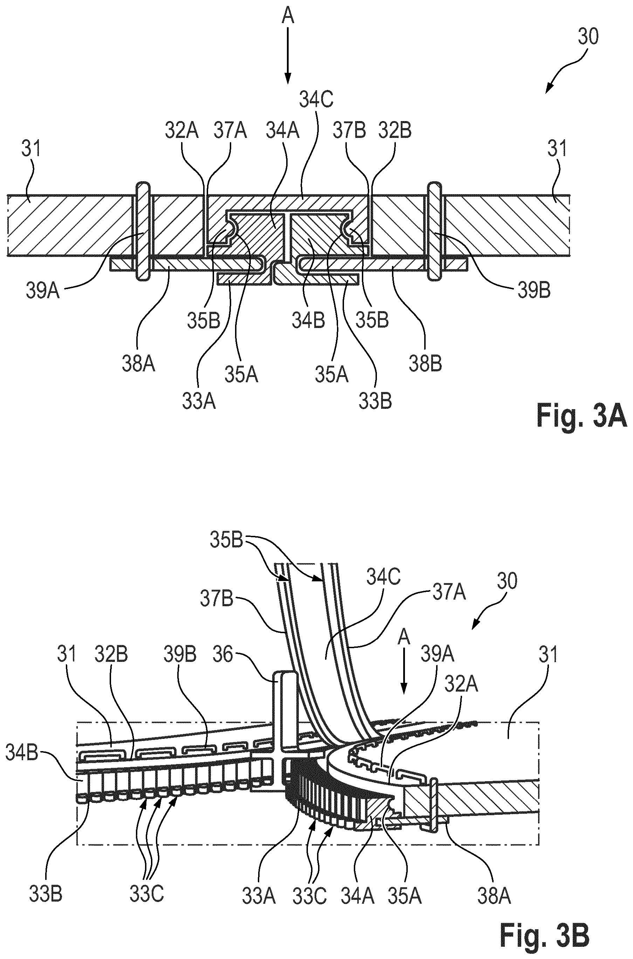

Fig. 3A zeigt eine Abwandlung des in Fig. 2A dargestellten Ausführungsbeispiels. Die im Folgenden detailliert beschriebene Abwandlung besteht im Grundsatz darin, dass auf den beiden Abdeckungsteilen ein Abdeckband 34C vorzugsweise formschlüssig aufgebracht wird, das im fertig montierten Zustand den sichtbaren Teil der Reißverschlussabdeckung bildet.

Das in Fig. 3A dargestellte Ausführungsbeispiel einer erfindungsgemäßen Verkleidungseinrichtung 30 weist wiederum ein verformbares flächiges Verkleidungselement 31 auf, das im am zu verkleidenden Gegenstand (nicht dargestellt) montierten Zustand im Querschnitt gezeigt ist. Das Verkleidungselement 31 weist zwei Längsränder 32A, 32B auf, die einander gegenüberliegen. Am Verkleidungselement 31 ist ein Reißverschluss angeordnet, der zwei Zahnreihen 33A, 33B aufweist, die miteinander in Eingriff gebracht sind. Eine dreiteilige Abdeckung 34A, 34B, 34C überdeckt den Reißverschluss im geschlossenen Zustand, genauer gesagt die dann in Eingriff befindlichen Zahnreihen 33A, 33B.

Die dreiteilige Abdeckung weist zwei längliche Körper 34A, 34B und ein darauf formschlüssig befestigtes Abdeckband 34C auf. Der erste Körper 34A ist dabei an der ersten Zahnreihe 33A befestigt oder einstückig mit dieser hergestellt und weist zwei in Längsrichtung verlaufende Seiten auf. Eine erste in Längsrichtung verlaufende Seite des ersten Körpers 34A ist dem ersten Längsrand 32A des Verkleidungselements 31 zugewandt und weist im bevorzugten Ausführungsbeispiel eine Reihe von Vertiefungen oder eine in Längsrichtung verlaufende Nut 35A auf. In analoger Weise ist der zweite Körper 34B an der zweiten Zahnreihe 33B befestigt oder einstückig mit dieser hergestellt und weist ebenfalls zwei in Längsrichtung verlaufende Seiten auf. Eine erste in Längsrichtung verlaufende Seite des zweiten Körpers 34B ist dem zweiten Längsrand 32B des Verkleidungselements 31 zugewandt und weist im bevorzugten Ausführungsbeispiel ebenfalls eine Reihe von Vertiefungen oder eine Nut 35A auf. Die jeweils zweiten in Längsrichtung verlaufenden Seiten der Körper 34A, 34B befinden sich in Kontakt miteinander, wenn sich der Reißverschluss im geschlossenen Zustand befindet, und bilden eine Außenfläche des Reißverschlusses, wenn sich der Reißverschluss im geöffneten Zustand befindet.

Die erwähnten Reihen von Vertiefungen bzw. Nuten 35A, die in den Körpern 34A, 34B ausgeformt sind, dienen der formschlüssigen Aufnahme von an dem genannten Abdeckband 34C ausgeformten Gegenstücken, beispielsweise Federn 35B, die an den seitlichen Schenkeln des im Querschnitt im Wesentlichen einem U-Profil entsprechenden Abdeckbandes 34C ausgebildet sind.

Die beiden Körper 34A, 34B und das Abdeckband 34C sind so ausgebildet, dass im fertig montierten Zustand ein erster Längsrand 37A des Abdeckbandes 34C im Wesentlichen bündig mit dem ersten Längsrand 32A des Verkleidungselements 31 abschließt und dass ein zweiter Längsrand 37B des Abdeckbandes 34C im Wesentlichen bündig mit dem zweiten Längsrand 32B des Verkleidungselements 31 abschließt.

Dabei sind die beiden Körper 34A, 34B und das Abdeckband 34C so dimensioniert, dass das Abdeckband in Richtung der durch Pfeil A gekennzeichneten Ansichtsseite der Verkleidungseinrichtung 30 nicht oder jedenfalls nicht merklich über das Verkleidungselement 31 hinausragt und/oder das Verkleidungselement 31 nicht oder jedenfalls nicht merklich über das Abdeckband 34C hinausragt.

Ferner sind die beiden Körper 34A, 34B zueinander passend gestaltet und können an den jeweils zweiten Seiten zueinander passende Profile aufweisen, beispielsweise eine sich in Längsrichtung erstreckende Nut (nicht dargestellt) in der zweiten Seite des ersten Körpers 34A und eine dazu passende Feder (nicht dargestellt) in der zweiten Seite des zweiten Körpers 34B, um die Widerstandsfähigkeit der dreiteiligen Abdeckung 34A, 34B, 34C gegenüber von der Ansichtsseite zum abzudeckenden Gegenstand hin wirkenden Kräften sowie die Präzision der Verbindungsbündigkeit zu erhöhen.

Insgesamt sind die drei Abdeckungsteile 34A, 34B, 34C so gestaltet, dass die beiden sich im geschlossenen Zustand des Reißverschlusses ergebenden Übergänge zwischen dem ersten Längsrand 32A des Verkleidungselements 31 und dem ersten Längsrand 37A des Abdeckbands 34C sowie zwischen dem zweiten Längsrand 37B des Abdeckbands 34C und dem zweiten Längsrand 32B des Verkleidungselements 31 im Wesentlichen bündig abschließen, mit anderen Worten also so, dass die in Richtung der Ansichtsseite A durch das Verkleidungselement 31 und das Abdeckband 34A insgesamt gebildete Oberfläche im Wesentlichen frei von Erhebungen oder Vertiefungen verläuft, insbesondere frei von Erhebungen und Vertiefungen, die für einen Benutzer des zu verkleidenden Gegenstandes haptisch wahrnehmbar sind.

In Ausführungsbeispielen können die Zahnreihen 33A, 33B an Trägerstreifen 38A, 38B befestigt sein, oder die Zahnreihen 33A, 33B werden durch auf Trägerstreifen 38A, 38B befestigte einzelne Zähne 33C (siehe Fig. 3B) gebildet. In anderen Ausführungsbeispielen können die Zahnreihen 33A, 33B einstückig mit den Trägerstreifen 38A, 38B ausgebildet sein. Die Trägerstreifen 38A, 38B sind ihrerseits am Verkleidungselement 31 entlang dessen Längsrändern 32A, 32B befestigt. Diese Befestigung kann durch Verkleben oder Verschweißen erreicht werden und/oder durch Vernähen mittels Nähten 39A, 39B, wie im Beispiel der Fig. 3A dargestellt.

Fig. 3B zeigt das in Fig. 3A dargestellte Ausführungsbeispiel der vorliegenden Erfindung in perspektivischer Darstellung aus einer zu Fig. 3A entgegengesetzten Blickrichtung, wobei ein Teil des Reißverschlusses im geschlossenen Zustand und ein Teil des Reißverschlusses im geöffneten Zustand gezeigt ist. Ein Reißverschlussschieber 36 dient dazu, die Zähne 33C der beiden Zahnreihen 33A, 33B in Eingriff oder außer Eingriff zu bringen.

Die seitlich neben den Längsrändern 32A, 32B verlaufende Nähte 39A, 39B bilden gemeinsam mit dem Abdeckband 34C einen optisch und haptisch ansprechenden Verschluss des Verkleidungselements 31.

Alternativ zu oder zusätzlich zur vorstehend beschriebenen formschlüssigen Verbindung ist es möglich, die bandförmige Abdeckung 34C auf der durch die beiden Körper 34A, 34B gebildeten gemeinsamen Oberfläche zu verkleben oder zu verschweißen.

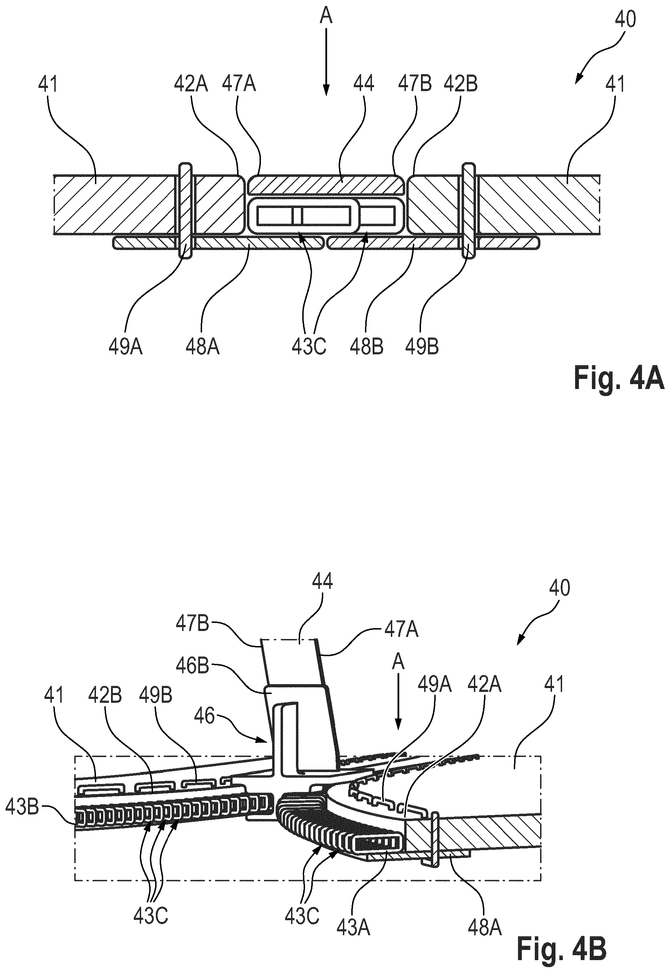

Fig. 4A schließlich zeigt ein Ausführungsbeispiel der vorliegenden Erfindung, bei dem die Abdeckung, deren Längsränder im geschlossenen Zustand des Reißverschlusses im Wesentlichen bündig mit den Längsrändern des Verkleidungselements abschließen, auf einen geeignet gestalteten Reißverschluss geklebt wird, und zwar passend in einen nach dem Schließen des Reißverschlusses gebildeten Kanal.

Das in Fig. 4A dargestellte Ausführungsbeispiel einer erfindungsgemäßen Verkleidungseinrichtung 40 weist wiederum ein verformbares flächiges Verkleidungselement 41 auf, das im am zu verkleidenden Gegenstand (nicht dargestellt) montierten Zustand im Querschnitt gezeigt ist. Das Verkleidungselement 41 weist zwei Längsränder 42A, 42B auf, die einander gegenüberliegen. Am Verkleidungselement 41 ist ein Reißverschluss angeordnet, der zwei aus Zähnen 43C gebildete Zahnreihen 43A, 43B aufweist (siehe Fig. 4B), die miteinander in Eingriff gebracht sind. Ein Abdeckband 44 überdeckt den Reißverschluss im geschlossenen Zustand, genauer gesagt die dann in Eingriff befindlichen Zahnreihen 43A, 43B.

Dabei sind die Zähne 43C so gestaltet, dass sie von der Ansichtsseite A her gesehen eine zum Aufkleben des Abdeckbandes 44 geeignete Fläche bilden, wenn die Zahnreihen miteinander in Eingriff gebracht sind. Eine geeignete Fläche ist vorzugsweise eben und möglichst geschlossen, ohne aber die seitliche Flexibilität der Zahnreihen wesentlich einzuschränken. Eine geeignete Zahnform ist in Fig. 4A im Querschnitt gezeigt und ist in einer Richtung quer zum Verlauf des Reißverschlusses länglich ausgebildet, beispielsweise in Form eines Hohlquaders, durch dessen Breite und Tiefe sich der Beitrag des jeweiligen Zahns 43C zur Klebefläche bestimmt.

Auch wenn hier in besonderer Art gestaltete Reißverschlusszähne Verwendung finden, sei nochmals darauf hingewiesen, dass grundsätzlich und so auch in diesem Ausführungsbeispiel vorteilhafterweise ein üblicher, klassischer Spiralreißverschluss verwendet werden kann, der sich neben kostengünstiger Verfügbarkeit durch hohe Festigkeit und geringen Raumbedarf auszeichnet.

Die Höhe eines Zahns 43C wird so gewählt, dass nach dem Schließen des Reißverschlusses ein flacher Kanal zwischen der gemeinsamen Oberfläche der Reißverschlusszähne 43C und den einander gegenüberliegenden Längsrändern 42A, 42B des Verkleidungselements 41 gebildet wird. In diesen Kanal wird ein passendes Abdeckband 44 eingeklebt, wobei Höhe der Zähne 43C, Höhe das Kanals und Materialstärke des Abdeckbandes 44 so gewählt werden, dass nach Abschluss der Montage und etwaigen Aushärtvorgängen des Klebers die beiden Übergänge zwischen dem einen Längsrand 42A des Verkleidungselements 41 und einem ersten Längsrand 47A des Abdeckbands 44 sowie zwischen einem zweiten Längsrand 47B des Abdeckbands 44 und dem zweiten Längsrand 42B des Verkleidungselements 41 im Wesentlichen bündig abschließen, mit anderen Worten also so, dass die in Richtung der Ansichtsseite A durch Verkleidungselement 41 und Abdeckband 44 insgesamt gebildete Oberfläche im Wesentlichen frei von Erhebungen oder Vertiefungen verläuft, insbesondere frei von Erhebungen und Vertiefungen, die für einen Benutzer des zu verkleidenden Gegenstandes haptisch wahrnehmbar sind.

Wie bereits im Zusammenhang mit den Fig. 1 bis 3 beschrieben können die Zahnreihen 43A, 43B in Ausführungsbeispielen an Trägerstreifen 48A, 48B befestigt sein, oder die Zahnreihen 43A, 43B werden durch auf Trägerstreifen 48A, 48B befestigte einzelne Zähne 43C gebildet. In anderen Ausführungsbeispielen können die Zahnreihen 43A, 43B einstückig mit den Trägerstreifen 48A, 48B ausgebildet sein. Die Trägerstreifen 48A, 48B sind ihrerseits am Verkleidungselement 41 entlang dessen Längsrändern 42A, 42B befestigt. Diese Befestigung kann durch Verkleben oder Verschweißen erreicht werden und/oder durch Vernähen mittels Nähten 49A, 49B, wie im Beispiel der Fig. 4A dargestellt.

Fig. 4B zeigt das in Fig. 4A dargestellte Ausführungsbeispiel der vorliegenden Erfindung in perspektivischer Darstellung aus einer zu Fig. 4A entgegengesetzten Blickrichtung, wobei ein Teil des Reißverschlusses im geschlossenen Zustand und ein Teil des Reißverschlusses im geöffneten Zustand gezeigt ist. Ein Reißverschlussschieber 46 dient dazu, die Zähne 43C der beiden Zahnreihen 43A, 43B in Eingriff oder außer Eingriff zu bringen. Reißverschlussschieber 46 ist in einer vorteilhaften Ausgestaltung so ausgebildet, dass gleichzeitig mit dem Schließen des Reißverschlusses das Abdeckband 44 ausgerichtet und dem Kanal zugeführt und dort verklebt wird.

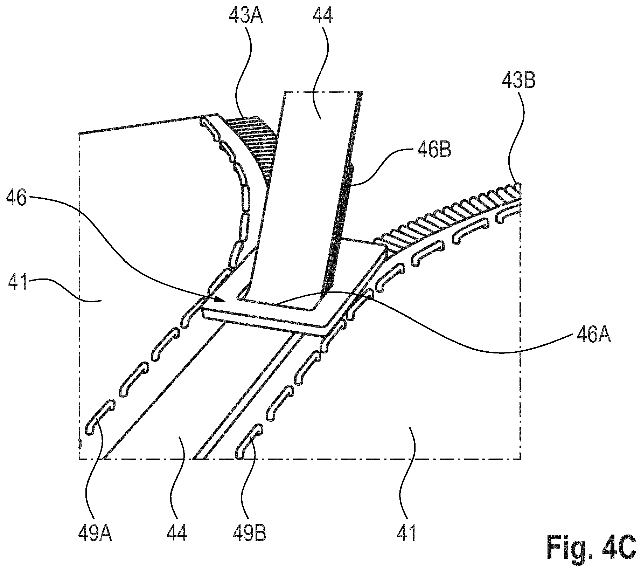

Fig. 4B und insbesondere eine perspektivische Darstellung aus einer zu Fig. 4B entgegengesetzten Blickrichtung in Fig. 4C zeigen dabei weitere Details eines vorteilhaften Reißverschlussschiebers 46. Reißverschlussschieber 46 weist eine Führungsplatte 46B auf, über welche das Abdeckband 44 geführt und/oder geglättet wird. In Ausführungsbeispielen weist der Reißverschlussschieber 46 Mittel (nicht dargestellt) zum Entfernen eines Schutzstreifens auf, der am Abdeckband angebracht ist und einen auf dem Abdeckband angebrachten Selbstklebestreifen schützt.

Gemeinsam mit einem auf den entstehenden Kanal ausgerichteten Schlitz 46A, durch welchen das Abdeckband 44 dem Kanal zugeführt wird, bewirkt die Führungsplatte 46B eine exakte Ausrichtung des Abdeckbandes 44. Von besonderem Vorteil ist, dass auf diese Weise das Schließen des Reißverschlusses und das Aufbringen der Abdeckung in einem Arbeitsschritt erfolgen können. Anders ausgedrückt wird während des Schließens des Reißverschlusses das Abdeckband 44 mittels des Reißverschlussschiebers 46 mitgezogen und auf die Zahnreihen aufgebracht.

Es sei an dieser Stelle darauf hingewiesen, dass dieses Wirkprinzip nicht auf Kleben als Verbindungstechnik beschränkt ist, sondern auch im Zusammenhang mit der im Zusammenhang mit Fig. 3 beschriebenen formschlüssigen Verbindungstechnik zwischen der Abdeckung 34C und den Körpern 34A, 34B verwendet werden kann.

Wiederum bilden die seitlich neben den Längsrändern 42A, 42B verlaufende Nähte 49A, 49B gemeinsam mit dem Abdeckband 44 einen optisch und haptisch ansprechenden Verschluss des Verkleidungselements 41.

Für alle Ausführungsbeispiele der Erfindung gilt, dass der Fachmann weitestgehend frei ist bei der Auswahl des Reißverschlussschiebers 16, 26, 36, 46, sofern der Reißverschlussschieber nicht die im Zusammenhang mit Fig. 4B und 4C beschriebenen zusätzlichen Funktionen übernimmt. So kann beispielsweise vorgesehen sein, dass der Reißverschlussschieber lediglich der Montage des Verkleidungselements dient und im Zuge der Montage, nach dem Verschließen des Reißverschlusses, entfernt wird, indem der Reißverschluss mit offenem Ende bereitgestellt wird, aus dem der Reißverschlussschieber einfach maschinell oder manuell herausgezogen werden kann. Dies erlaubt den Einsatz eines robusten und wiederverwendbaren, funktionalen Reißverschlussschiebers, auf dessen optische Anmutung es nicht ankommt und der auch nicht an irgendeiner Stelle versteckt werden muss.

Insbesondere bei der hier bevorzugten Anwendung im Zusammenhang mit dem Lenkrad oder dem Sitz eines Kraftfahrzeugs kann es akzeptabel sein, den Reißverschluss nur einmal, dafür dann dauerhaft, zu verschließen und in Kauf zu nehmen, dass ein Öffnen nur mit Spezialwerkzeug oder unter der Zerstörung des Reißverschlusses möglich ist, beispielsweise weil das erwartete Lebensende des Verkleidungselement vor dem des Reißverschlusses liegt.

Alternativ können, wie im Zusammenhang mit der vorstehenden Beschreibung des in Fig. 1 dargestellten Ausführungsbeispiels bereits angedeutet, verdeckte Reißverschlussschieber eingesetzt werden, insbesondere beispielsweise solche, die durch Magnete von außen bewegbar sind. In wiederum anderen Ausgestaltungen kann der Reißverschlussschieber als am Ende des Reißverschlusses verbleibend ausgestaltet und dabei auf eine dem Fachmann geläufige Art versteckt werden, beispielsweise in einer dafür vorgesehenen Öffnung oder Nut einer Lenkradspeiche unter einer später montierbaren Frontabdeckung des Lenkrads oder im unteren Bereich eines Sitzes außerhalb des üblichen Sichtbereiches.

Es sei darauf hingewiesen, dass die in den Fig. 1 bis 4 gewählten Darstellungen der Befestigung der Trägerstreifen 18, 28, 38, 48 am Verkleidungselement 11, 21, 31, 41 lediglich beispielhaft sind. Wie bereits im Zusammenhang mit den Erörterungen zu den jeweiligen Ausführungsbeispielen erwähnt kann es, wie in Fig. 2 gezeigt, genügen oder aus optischen Gründen bevorzugt sein, die Trägerstreifen mit dem Verkleidungselement zu verkleben oder zu verschweißen und auf ein zusätzliches Vernähen zu verzichten. In anderen Ausführungsbeispielen kann zusätzlich oder alternativ zum Verkleben oder Verschweißen ein Vernähen der Trägerstreifen mit dem Verkleidungselement erfolgen.

Dabei kann die Naht 19, 39, 49 optisch und/oder haptisch auffällig gestaltet werden, beispielsweise indem die Naht mit starkem farblichen Kontrast zum Verkleidungselement gewählt wird und in bevorzugten Ausführungsbeispielen der ansichtsseitigen Farbe der Abdeckung 14, 24, 34, 44 angeglichen wird und/oder indem die Naht aus einem entsprechend dicken Material hergestellt wird und bewusst auf dem Verkleidungselement ruht und damit auch haptisch wahrnehmbar ist.

In anderen Ausführungsbeispielen kann die Naht optisch und/oder haptisch unauffällig gestaltet werden, beispielsweise indem die Farbe der Naht der Farbe des Verkleidungselements angeglichen wird und/oder indem die Naht in entsprechenden länglichen Ausnehmungen des Verkleidungselements eingebettet wird und in Richtung der Ansichtsseite A im Wesentlichen frei von Erhebungen oder Vertiefungen mit der Oberfläche des Verkleidungselements abschließt, insbesondere frei von Erhebungen und Vertiefungen, die für einen Benutzer des zu verkleidenden Gegenstandes haptisch wahrnehmbar sind.

Ferner sei darauf hingewiesen, dass verschiedenste Naht- und Stichformen einschließlich Doppel- oder Mehrfachnähungen verwendet werden können, um eine bestimmte Mindestfestigkeit der Naht zu gewährleisten und/oder einen bestimmten optischen und/oder haptischen Effekt zu erzielen, ohne dabei den Schutzbereich der beiliegenden Patentansprüche zu verlassen.

Im Zusammenhang mit der vorliegenden Erfindung stehen dem Fachmann für das Verkleidungselement einerseits und den Reißverschluss und seine Abdeckung andererseits eine derart große Vielzahl von teilweise sehr verschiedenen Materialien und Materialkombinationen sowie Fertigungsverfahren zur Verfügung, dass hier nur Grundsätze zu deren Auswahl beschrieben werden können.

Die Auswahl des Materials für das Verkleidungselement ist stark abhängig vom Einsatzzweck und der angestrebten Wertigkeit. Für die hier bevorzugte Anwendung im Zusammenhang mit dem Lenkrad eines Kraftfahrzeugs eignen sich besonders Leder, Kunstleder und ähnliche Materialien mit einer hohen Abriebfestigkeit bei gleichzeitig hoher haptischer Anmutung, während für die weitere bevorzugte Anwendung im Zusammenhang mit dem Sitz eines Kraftfahrzeugs zusätzlich auch widerstandsfähige Gewebe aller Art in Frage kommen. Losgelöst von den bevorzugten Anwendungen ist also festzustellen, dass für das Verkleidungselement 11, 21, 31, 41 sehr viele verschiedene Materialien einsetzbar sind, unter denen der Fachmann nach den ihm geläufigen Überlegungen (Kosten, Anmutung, Haltbarkeit, ...) auswählt, ohne dabei den Schutzbereich der beiliegenden Patentansprüche zu verlassen. Es sei darauf hingewiesen, dass das Verkleidungselement nicht aus einem einheitlichen Material gefertigt sein muss, sondern beispielsweise für den Sitz eines Kraftfahrzeugs aus verschiedenen Abschnitten zusammengefügt sein kann, die zudem aus verschiedenen Materialien gefertigt sein können.

Gleichermaßen eignen sich viele, teilweise sehr verschiedene Materialien und Materialkombinationen grundsätzlich für die Herstellung des Reißverschlusses und seiner Abdeckung, beispielsweise Kunststoffe, Kunststoffkombinationen oder Metall-Kunststoffkombinationen, und die Materialauswahl wird sich auch hier in der Praxis beispielsweise danach bestimmen, welche Lebensdauer die Verkleidungseinrichtung mindestens haben soll, welche Farbkombinationen zum Einsatz kommen und welche Verschlechterungen, auch und insbesondere hinsichtlich Optik und Haptik, über die Lebensdauer vom Benutzer akzeptiert werden.

Dies ist besonders beim hier vorrangig betrachteten Einsatz als hochwertige Verkleidung für ein Lenkrad oder einen Sitz eines Kraftfahrzeugs bedeutsam, bei welchem Einsparungen hinsichtlich der Materialkosten gegenüber der Langlebigkeit des besonderen Umweltbedingungen, insbesondere einem weiten Temperaturbereich und starker UV-Einstrahlung, ausgesetzten Produkts besonders sogfältig abzuwägen sind. Aufgrund der hohen Stückzahlen in diesem Produktumfeld kann es sich andererseits schnell rechnen, spezielle Werkzeuge oder Maschinen vorzusehen, mit denen die Zahl einzelner Arbeitsschritte reduziert werden können.

So kann es sich beispielsweise mit Blick auf die in Zusammenhang mit Fig. 1 und Fig. 2 beschriebenen Ausführungsbeispiele anbieten, die Zahnleisten mit den Abdeckungsteilen und den Trägerstreifen in einem Arbeitsschritt, beispielsweise durch Spritzguss, herzustellen, oder die Zahl der Arbeitsschritte zu minimieren, indem beispielsweise ein vorgefertigter, beispielsweise zur Erhöhung der Flexibilität gewebter, Trägerstreifen in einem Arbeitsgang mit den Zahnleisten und Abdeckungsteilen umspritzt wird.

In Ausführungsbeispielen kann dabei, wenn für die Zahnleisten eine bestimmte Steifigkeit unabdingbar ist und für die Abdeckungsteile gleichzeitig eine bestimmte Flexibilität erforderlich ist, ein Zwei- oder Mehrkomponentenspritzgussverfahren angewendet werden, um Materialen verschiedener Steifigkeit zu kombinieren. Alternativ oder zusätzlich kann die Flexibilität eines steifen Materials durch gezielte Materialschwächungen erhöht werden, beispielsweise durch eine Verrippung an einer der Ansichtsseite abgewandten Seite der Abdeckungsteile, beispielsweise an der Innenseite der im Wesentlichen als U-Profil ausgebildeten Abdeckung 14 in Fig. 1.

Es sei allerdings darauf hingewiesen, dass die vorliegende Erfindung nicht auf den Einsatz im Kraftfahrzeug beschränkt ist. Die vorliegende Erfindung kann aufgrund der durch sie erreichbaren Vorteile, insbesondere den erhebungsfreien Verschluss mit seinen einzigartigen optischen und haptischen Merkmalen, auch im Zusammenhang mit Möbelstücken, Matratzen, Kleidungsstücken, Taschen und generell Verkleidungen und Umhüllungen aller Art eingesetzt werden.

### Bezugszeichen

- 10: Verkleidungseinrichtung
- 11: Verkleidungselement
- 12A: erster Längsrand des Verkleidungselements
- 12B: zweiter Längsrand des Verkleidungselements
- 13A: erste Zahnreihe
- 13B: zweite Zahnreihe
- 13C: Zahn
- 14: Abdeckung
- 15: Raum
- 16: Reißverschlussschieber
- 17A: erster Längsrand der Abdeckung
- 17B: zweiter Längsrand der Abdeckung
- 18A: erster Trägerstreifen
- 18B: zweiter Trägerstreifen
- 19A: erste Naht
- 19B: zweite Naht

- 20: Verkleidungseinrichtung
- 21: Verkleidungselement
- 22A: erster Längsrand des Verkleidungselements
- 22B: zweiter Längsrand des Verkleidungselements
- 23A: erste Zahnreihe
- 23B: zweite Zahnreihe
- 23C: Zahn
- 24A: erstes Abdeckungsteil
- 24B: zweites Abdeckungsteil
- 25A: erster Längsrand
- 25B: zweiter Längsrand
- 26: Reißverschlussschieber
- 27A: erster Längsrand des ersten Abdeckungsteils
- 27B: erster Längsrand des zweiten Abdeckungsteils
- 28A: erster Trägerstreifen
- 28B: zweiter Trägerstreifen
- 30: Verkleidungseinrichtung
- 31: Verkleidungselement
- 32A: erster Längsrand des Verkleidungselements
- 32B: zweiter Längsrand des Verkleidungselements
- 33A: erste Zahnreihe
- 33B: zweite Zahnreihe
- 33C: Zahn
- 34A: erster Körper
- 34B: zweiter Körper
- 34C: Abdeckband
- 35A: Nut
- 35B: Feder
- 36: Reißverschlussschieber
- 37A: erster Längsrand des Abdeckbandes
- 37B: zweiter Längsrand des Abdeckbandes
- 38A: erster Trägerstreifen
- 38B: zweiter Trägerstreifen
- 39A: erste Naht
- 39B: zweite Naht

- 40: Verkleidungseinrichtung
- 41: Verkleidungselement
- 42A: erster Längsrand des Verkleidungselements
- 42B: zweiter Längsrand des Verkleidungselements
- 43A: erste Zahnreihe
- 43B: zweite Zahnreihe
- 43C: Zahn
- 44: Abdeckband
- 46: Reißverschlussschieber
- 46A: Schlitz
- 46B: Platte
- 47A: erster Längsrand des Abdeckbandes
- 47B: zweiter Längsrand des Abdeckbandes
- 48A: erster Trägerstreifen
- 48B: zweiter Trägerstreifen
- 49A: erste Naht
- 49B: zweite Naht

## Patentansprüche

1. Verkleidungseinrichtung (10, 20, 30, 40), insbesondere Lenkradverkleidungseinrichtung,
- mit einem verformbaren flächigen Verkleidungselement (11, 21, 31, 41) mit zwei Längsrändern (12A, 12B, 22A, 22B, 32A, 32B, 42A, 42B), das dazu ausgebildet ist, einen zu verkleidenden Gegenstand derart zu umfassen, dass die Längsränder einander gegenüberliegen,
- mit einem an dem flächigen Verkleidungselement angeordneten Reißverschluss, der zwei miteinander in Eingriff bringbare Zahnreihen (13A, 13B, 23A, 23B, 33A, 33B, 43A, 43B) aufweist, wobei jeweils eine Zahnreihe einem der Längsränder zugeordnet ist,
- mit einer Abdeckung (14, 24A, 24B, 34A, 34B, 34C, 44), welche die Zahnreihen des Reißverschlusses im geschlossenen Zustand überdeckt,
**dadurch gekennzeichnet, dass**
- die Abdeckung so gestaltet ist, dass Längsränder (17A, 17B, 27A, 27B, 37A, 37B, 47A, 47B) der Abdeckung im geschlossenen Zustand des Reißverschlusses im Wesentlichen bündig mit den Längsrändern des flächigen Verkleidungselements (11, 21, 31, 41) abschließen. wobei die Abdeckung einen beim Schließen des Reißverschlusses entstehenden Kanal zwischen den Längsrändern (12A, 12B, 22A, 22B, 32A, 32B, 42A, 42B) des flächigen Verkleidungselements (11, 21, 31, 41) ausfüllt, ohne dabei über die Längsränder (12A, 12B, 22A, 22B, 32A, 32B, 42A, 42B) des flächigen Verkleidungselements (11, 21, 31, 41) hinauszuragen und ohne diese zumindest teilweise zu überdecken oder an der Ansichtsseite (A) des Verkleidungsmaterials befestigt zu sein.

2. Verkleidungseinrichtung nach Anspruch 1,
**dadurch gekennzeichnet, dass**
die Abdeckung (14) im Wesentlichen einen Querschnitt in Form eines U-Profils aufweist und so gestaltet ist, dass beim Schließen des Reißverschlusses unterhalb des U-Profils zwischen Abdeckung und den Zahnreihen ein sich in Längsrichtung erstreckender freier Raum (15) gebildet wird, in welchem ein Reißverschlussschieber (16) bewegbar ist.

3. Verkleidungseinrichtung nach einem der vorhergehenden Ansprüche,
**dadurch gekennzeichnet, dass**
die Abdeckung (14) einstückig mit einer der Zahnreihen (13A) ausgebildet ist.

4. Verkleidungseinrichtung nach einem der vorhergehenden Ansprüche,
**dadurch gekennzeichnet, dass**
die Abdeckung (24A, 24B) in Längsrichtung zweigeteilt ist, wobei je ein Abdeckungsteil einstückig mit je einer der Zahnreihen (23A, 23B) ausgebildet ist.

5. Verkleidungseinrichtung nach einem der Ansprüche 1 oder 2,
**dadurch gekennzeichnet, dass**
die Abdeckung einen Abdeckstreifen (34C, 44) aufweist, der gemeinsam mit oder nach einem Schließvorgang des Reißverschlusses auf die Zahnreihen aufbringbar ist, insbesondere auf die Zahnreihen aufklebbar oder formschlüssig mit den Zahnreihen verbindbar ist.

6. Verkleidungseinrichtung nach Anspruch 5,
**dadurch gekennzeichnet, dass**
die Zahnreihen Zähne (43C) mit im Wesentlichen hohlquaderförmigem Querschnitt aufweisen, deren Oberflächen im geschlossenen Zustand des Reißverschlusses eine Klebefläche zum Aufkleben des Abdeckbandes (44) bilden.

7. Verkleidungseinrichtung nach einem der Ansprüche 5 oder 6,
**gekennzeichnet durch**
einen Reißverschlussschieber (46), mittels dessen die Zahnreihen in Eingriff bringbar sind, wobei der Reißverschlussschieber (46) so ausgestaltet ist, dass das Abdeckband (44) in einem kontinuierlichen und einheitlichen Arbeitsgang mit dem Schließen der Zahnreihen aufbringbar ist.

8. Verkleidungseinrichtung nach Anspruch 5,
**dadurch gekennzeichnet, dass**
an zumindest einer der Zahnreihen (33A) ein sich in Längsrichtung erstreckender Körper (34A, 34B) mit zumindest einer seitlichen Vertiefung, insbesondere einer Nut (35A), angebracht ist, in die zumindest ein Gegenstück des Abdeckbandes (34C), insbesondere eine Feder (35B), zur Herstellung der formschlüssigen Verbindung einschnappbar ist.

9. Verkleidungseinrichtung nach Anspruch 8,
**dadurch gekennzeichnet, dass**
der sich in Längsrichtung erstreckende Körper im geschlossenen Zustand des Reißverschlusses aus zwei sich in Längsrichtung erstreckenden Teilkörpern (34A, 34B) gebildet wird, wobei je ein Teilkörper einstückig mit je einer der Zahnreihen ausgebildet ist und wobei jeder Teilkörper zumindest eine seitliche Vertiefung, insbesondere eine Nut, aufweist, in die Gegenstücke des Abdeckbandes, insbesondere eine Feder, zur Herstellung der formschlüssigen Verbindung einschnappbar sind.

10. Verkleidungseinrichtung nach einem der vorhergehenden Ansprüche,
**dadurch gekennzeichnet, dass**
die Zahnreihen durch Vernähen mit dem Verkleidungselement so verbunden sind, dass seitlich neben den Längsrändern verlaufende Nähte (19A, 19B, 39A, 39B, 49A, 49B) gebildet werden, deren Verlauf neben der Abdeckung sichtbar ist und die somit zur haptischen und/oder optischen Erscheinung der Verkleidungseinrichtung beitragen.

## Claims

1. Trim device (10, 20, 30, 40), in particular steering wheel trim device,
- comprising a deformable flat trim element (11, 21, 31, 41) having two longitudinal edges (12A, 12B, 22A, 22B, 32A, 32B, 42A, 42B), which is designed to encompass an object to be covered in such a way that the longitudinal edges are opposite one another,
- comprising a zipper arranged on the flat trim element, which has two rows (13A, 13B, 23A, 23B, 33A, 33B, 43A, 43B) of teeth which can be brought into engagement with one another, in each case one row of teeth being assigned to one of the longitudinal edges,
- comprising a cover (14, 24A, 24B, 34A, 34B, 34C, 44), which covers the rows of teeth of the zipper when closed,
**characterized in that**
- the cover is designed in such a way that longitudinal edges (17A, 17B, 27A, 27B, 37A, 37B, 47A, 47B) of the cover, when the zipper is closed, are substantially flush with the longitudinal edges of the flat trim element (11, 21, 31, 41), the cover filling a channel created when the zipper is closed between the longitudinal edges (12A, 12B, 22A, 22B, 32A, 32B, 42A, 42B) of the flat trim element (11, 21, 31, 41), without projecting beyond the longitudinal edges (12A, 12B, 22A, 22B, 32A, 32B, 42A, 42B) of the flat trim element (11, 21, 31, 41) and without at least partially covering them or being attached to the visible side (A) of the trim material.

2. Trim device according to claim 1,
**characterized in that**
the cover (14) substantially has a cross-section in the form of a U-profile and is designed such that when the zipper is closed, a free space (15) extending in the longitudinal direction is formed below the U-profile between the cover and the rows of teeth, in which free space a zipper slider (16) is movable.

3. Trim device according to either of the preceding claims,
**characterized in that**
the cover (14) is formed in one piece with one of the rows (13A) of teeth.

4. Trim device according to any of the preceding claims,
**characterized in that**
the cover (24A, 24B) is divided into two parts in the longitudinal direction, each cover part being formed in one piece with one of the rows (23A, 23B) of teeth.

5. Trim device according to either claim 1 or claim 2,
**characterized in that**
the cover has a cover strip (34C, 44) which can be applied to the rows of teeth together with or after a closing operation of the zipper, in particular can be adhered to the rows of teeth or can be connected to the rows of teeth in a form-fitting manner.

6. Trim device according to claim 5,
**characterized in that**
the rows of teeth have teeth (43C) that have a substantially hollow cuboid-shaped cross-section, the surfaces of which form an adhesive surface for adhering the cover tape (44) when the zipper is closed.

7. Trim device according to either claim 5 or claim 6,
**characterized by**
a zipper slider (46) by means of which the rows of teeth can be brought into engagement, the zipper slider (46) being designed such that the cover tape (44) can be applied in a continuous and uniform operation with the closing of the rows of teeth.

8. Trim device according to claim 5,
**characterized in that**
a body (34A, 34B) extending in the longitudinal direction is attached to at least one of the rows (33A) of teeth, the body having at least one lateral recess, in particular a groove (35A), into which at least one counterpart of the cover tape (34C), in particular a spring (35B), can be snapped in order to produce the form-fitting connection.

9. Trim device according to claim 8,
**characterized in that**
the body extending in the longitudinal direction is formed, in the closed state of the zipper, from two partial bodies (34A, 34B) extending in the longitudinal direction, each partial body being formed in one piece with one of the rows of teeth, and each partial body having at least one lateral recess, in particular a groove, into which counterparts of the cover tape, in particular a spring, can be snapped in order to produce the form-fitting connection.

10. Trim device according to any of the preceding claims,
**characterized in that**
the rows of teeth are connected to the trim element by sewing in such a way that seams (19A, 19B, 39A, 39B, 49A, 49B) are formed running laterally next to the longitudinal edges, the course of which is visible next to the cover and which thus contribute to the haptic and/or optical appearance of the trim device.

## Revendications

1. Dispositif d'habillage (10, 20, 30, 40), en particulier dispositif d'habillage de volant de direction,
- comportant un élément d'habillage plat déformable (11, 21, 31, 41) comportant deux bords longitudinaux (12A, 12B, 22A, 22B, 32A, 32B, 42A, 42B), qui est conçu pour entourer un objet à habiller de telle sorte que les bords longitudinaux se font face,
- comportant une fermeture à glissière agencée sur l'élément d'habillage plat, qui présente deux rangées de dents (13A, 13B, 23A, 23B, 33A, 33B, 43A, 43B) pouvant être mises en prise les unes avec les autres, dans lequel une rangée de dents est respectivement associée à l'un des bords longitudinaux,
- comportant un élément de recouvrement (14, 24A, 24B, 34A, 34B, 34C, 44) qui recouvre les rangées de dents de la fermeture à glissière lorsqu'elle est fermée,
**caractérisé en ce que**
- l'élément de recouvrement est conçu de telle sorte que des bords longitudinaux (17A, 17B, 27A, 27B, 37A, 37B, 47A, 47B) de l'élément de recouvrement se terminent, à l'état fermé de la fermeture à glissière, sensiblement à fleur avec les bords longitudinaux de l'élément d'habillage plat (11, 21, 31, 41), dans lequel l'élément de recouvrement remplit un canal formé lors de la fermeture de la fermeture à glissière entre les bords longitudinaux (12A, 12B, 22A, 22B, 32A, 32B, 42A, 42B) de l'élément d'habillage plat (11, 21, 31, 41), sans pour autant dépasser des bords longitudinaux (12A, 12B, 22A, 22B, 32A, 32B, 42A, 42B) de l'élément d'habillage plat (11, 21, 31, 41) et sans les recouvrir au moins partiellement ou être fixé sur la face visible (A) du matériau d'habillage.

2. Dispositif d'habillage selon la revendication 1,
**caractérisé en ce que**
l'élément de recouvrement (14) présente sensiblement une section transversale en forme de profilé en U et est réalisé de telle sorte que, lors de la fermeture de la fermeture à glissière, un espace libre (15) s'étendant dans le sens longitudinal est formé en dessous du profilé en U entre l'élément de recouvrement et les rangées de dents, espace dans lequel un curseur de fermeture à glissière (16) est mobile.

3. Dispositif d'habillage selon l'une des revendications précédentes,
**caractérisé en ce que**
l'élément de recouvrement (14) est formé d'un seul tenant avec l'une des rangées de dents (13A).

4. Dispositif d'habillage selon l'une des revendications précédentes,
**caractérisé en ce que**
l'élément de recouvrement (24A, 24B) est divisé en deux dans la direction longitudinale, dans lequel chaque partie d'élément de recouvrement est conçue d'une seule pièce avec chacune des rangées de dents (23A, 23B).

5. Dispositif d'habillage selon l'une des revendications 1 ou 2,
**caractérisé en ce que**
l'élément de recouvrement présente une bande de recouvrement (34C, 44) qui peut être appliquée sur les rangées de dents conjointement avec ou après une opération de fermeture de la fermeture à glissière, en particulier peut être collée sur les rangées de dents ou peut être reliée aux rangées de dents par complémentarité de formes.

6. Dispositif d'habillage selon la revendication 5,
**caractérisé en ce que**
les rangées de dents présentent des dents (43C) comportant une section transversale sensiblement en forme de parallélépipède creux, dont les surfaces forment, à l'état fermé de la fermeture à glissière, une surface adhésive pour le collage de la bande de recouvrement (44).

7. Dispositif d'habillage selon l'une des revendications 5 ou 6,
**caractérisé par**
un curseur de fermeture à glissière (46) au moyen duquel les rangées de dents peuvent être mises en prise, dans lequel le curseur de fermeture à glissière (46) est réalisé de telle sorte que la bande de recouvrement (44) peut être appliquée en une étape de travail continue et unitaire avec la fermeture des rangées de dents.

8. Dispositif d'habillage selon la revendication 5,
**caractérisé en ce que**
sur au moins l'une des rangées de dents (33A) est monté un corps (34A, 34B) s'étendant dans la direction longitudinale et comportant au moins un renfoncement latéral, en particulier une rainure (35A), dans lequel au moins une contre-pièce de la bande de recouvrement (34C), en particulier un ressort (35B), peut être encliquetée pour établir la liaison par complémentarité de formes.

9. Dispositif d'habillage selon la revendication 8,
**caractérisé en ce que**
le corps s'étendant dans la direction longitudinale est formé, à l'état fermé de la fermeture à glissière, de deux corps partiels (34A, 34B) s'étendant dans la direction longitudinale, dans lequel chaque corps partiel est conçu d'une seule pièce avec chacune des rangées de dents, et dans lequel chaque corps partiel présente au moins un renfoncement latéral, en particulier une rainure, dans lequel des contre-pièces de la bande de recouvrement, en particulier un ressort, peuvent être encliquetées pour établir la liaison par complémentarité de formes.

10. Dispositif d'habillage selon l'une des revendications précédentes,
**caractérisé en ce que**
les rangées de dents sont reliées par couture à l'élément d'habillage de telle sorte que des coutures (19A, 19B, 39A, 39B, 49A, 49B) s'étendant latéralement à côté des bords longitudinaux sont formées, dont le tracé est visible à côté de l'élément de recouvrement et qui contribuent ainsi à l'aspect haptique et/ou optique du dispositif d'habillage.
